# EUROPEAN PATENT APPLICATION

(11) **EP 2 679 290 A1**
(43) Date of publication of application: **01.01.2014**
(21) Application number: 12305759.8
(22) Date of filing: 28.06.2012
(51) Int. Cl.: A63F 13/12, A63F 13/10

(54) **Method for supporting a joint activity of a plurality of remote communication devices**

(71) Applicant: Alcatel Lucent, 75007 Paris (FR)
(72) Inventor: Lou, Zhe, 2640 Mortsel (BE); Van Broeck, Sigurd, 2980 Zoersel (BE); Van Den Broeck, Marc, 2860 Sint-Katelijne-Waver (BE)
(74) Representative: ALU Antw Patent Attorneys

(57) **Abstract**

The present invention relates to a method for supporting a joint activity of a plurality of remote communication devices each remote communications device of the plurality of remote communications devices being coupled to a server device over a communications network wherein the method of the present invention comprises the steps of a first communications device capturing physical objects of a real environment and a respective motion of such physical objects and the server device analyzing the physical objects of a real environment and a respective motion of such physical objects captured at the first communications device, the step of generating a 3D representation of the real environment at the first communications device based on the analyzing the physical objects of a real environment and a respective motion of such physical objects captured at said first communications device, the step of augmenting a real environment of the second communications device with the 3D representation of the real environment at the first communications device and optional step of generating a conflict resolution instruction for a communications device of the plurality of communications devices at least based on the analyzing of the physical objects of a real environment and a respective motion of such physical objects captured at the first communications device.

## Description

The present invention relates to a method, a system, a related communications device and a related server device for supporting a joint activity of a plurality of remote communication devices.

Such a method and a system for supporting a joint activity of a plurality of remote communication devices, is well known in the art, e.g. from online gaming systems which are becoming more and more popular, or from shared online document processing like common document editing, collaborative painting.

In such online gaming systems, users only are able to use a mouse or keyboard, a touch-screen etc. of a communications device for controlling such online game like a poke -, chess game or other game. This interface for controlling such an online game does not render a same gaming experience as a real poke game or chess game where people are present around a table and play the game with real cards or real pieces which creates a more immersive and social experience.

Disadvantageously, currently in such system and method it is not possible to provide a first communications device of a plurality of communications devices with control of a second and/or further communications device of a plurality of communications devices where each remote communications devices of the plurality of communications devices is involved in the joint activity.

An objective of the present invention is to provide a method, a system, a related communications device and server device of the above known type but wherein the joint activity of the second or further communications devices can be controlled by a first communications device.

According to the invention, this object is achieved by the method for supporting a joint activity of a plurality of remote communications devices according to claim 1, a related system according to claim 5, a related remote communications device according to claim 9, a related server device according to claim 10 and a related second remote communications device according to claim 14.

Indeed by a first communications device capturing the presence of physical objects of a real environment at the first communications device and a respective motion of such physical objects which step is succeeded, possibly by a server device analyzing the presence of physical objects and the respective motion of these physical objects of the real environment captured and generating a 3-Dimensional representation of the real environment at the first communications device based on the analyzing of the presence of physical objects of a real environment and a respective motion of such physical objects at the first communications device captured and subsequently a real environment of the second communications device is augmented with the generated 3-Dimensional representation of the real environment at the first communications device and optionally a conflict resolution instruction for a communications device of the plurality of communications devices may be generated at least based on the analyzing of the physical objects of a real environment and a respective motion of such physical objects at the first communications device captured.

Hence based on the analysis of the captured physical objects of a real environment at the first communications device and a respective motion of such physical objects, a 3-Dimensional representation of the real environment at the first communications device is generated that in turn is applied for augmenting a real environment belonging to the second and/or further communications device.

Such *joint activity* may be a gaming activity like a chess game, a poke game or but alternatively may also include joint document processing collaborative painting or any other suitable shared activity.

Such *physical object* may be chess-piece in case of a chess game, be a, or alternatively a pen a finger or other object forming part of the real environment of a communications device.

Furthermore the step of *augmenting* is the enriching of the real environment of a second or further communications device with a virtual component being a 3 dimensional representation of the real environment of the first communications device. In this way the real environment of a first communications device is completed with a 3 dimensional representation of a the real environment of the other participants in the joint activity together forming the complete environment the joint activity is taking place in.

Another characterizing embodiment of the present invention is disclosed in claim 2, claim 6 and claim 11.

An additional feature of the present invention is that a conflict resolution instruction can be generated for a communications device of the plurality of communications devices at least based on the analyzing of the presence of physical objects of a real environment and a respective motion of such physical objects captured at the first communications device.

Moreover, the analysis, in case of a conflict situation, is applied for generating a conflict resolution instruction for a communications device of the plurality of communications devices at least based on the analyzing of the presence and physical objects and their respective motion.

An example of such a conflict is the collision of a real piece and a virtual piece in a chess game.

Conflict examples are related to the game rules. For instance, in the GO game (see http://en.wikipedia.org/wiki/Go_%28game%29), there is a conflict when a piece gets surrounded by a few pieces from the other partner.

In one of the poke games (there are many poke games with different rules.), the conflict could be that the current card is bigger than the previous one.

A server device may generate a conflict resolution instruction and subsequently send a notification to one or more of the involved communications devices, depending on the situation, notifying that one of the pieces is defeated. For some joint activities like some games such conflict resolution may be required, for other the feature is not.

At first the presence and location of a real game piece like a chess piece in the chess game, a card in the poke game, a black or white piece in the GO game and so on, is detected . Subsequently a conflict resolution part may detect conflicts and provide corresponding instructions to users. The conflict resolution part further is adapted to calculate some potential confliction based on game rules.

For instance in the GO game, once the system detects a group of black pieces is surrounded by a group of white pieces being a conflict in this situation, an instruction may be sent to both players indicating that all the black pieces should be removed. So the player with black pieces should manually remove those real black pieces from the board. As a consequence, the virtual black pieces on the screen of the other player disappear.

Another characterizing embodiment of the present invention is disclosed in claim 3, claim 7 and claim 12.

The generating of a conflict resolution instruction additionally is based on at least one rule of the joint activity. For instance in case the joint activity is a game, rules of such games are to be taken into account in determining such instruction. Such rule may deal with the avoidance of a collision between actions taken or a status of each of the remote communications devices.

Rule1: In chess game, if there is a collision between two pieces, remove the previous piece in that location

Rule 2: In the GO game, if a white piece gets surrounded by a group of black pieces, remove the white piece

Rule 3: In one of the poke games, if the current card is bigger than the previous one, remove the previous card.

Another characterizing embodiment of the present invention is disclosed in claim 4, claim 8 and claim 13.

The generating of a conflict resolution instruction additionally is based on the analyzing of the physical objects and their respective motion of these physical objects of the real environment captured at a second or further communications device of the plurality of communications devices.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a system for supporting a joint activity of a plurality of remote communication devices including communication devices CD1 and CD2 and server device SD; and.
Fig. 2 represents the functional structure of a remote communications device CD1 according to the present invention; and
Fig. 3 represents the functional structure of a server device SD according to the present invention.

In the following paragraphs, referring to the drawings, an implementation of the Method for supporting a joint activity of a plurality of remote communication devices according to the present invention will be described.

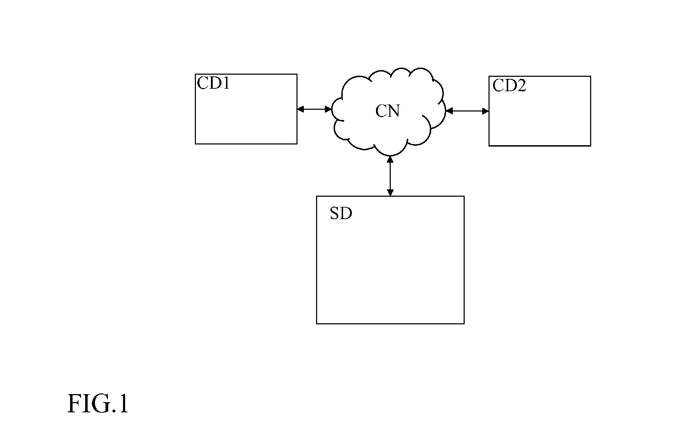

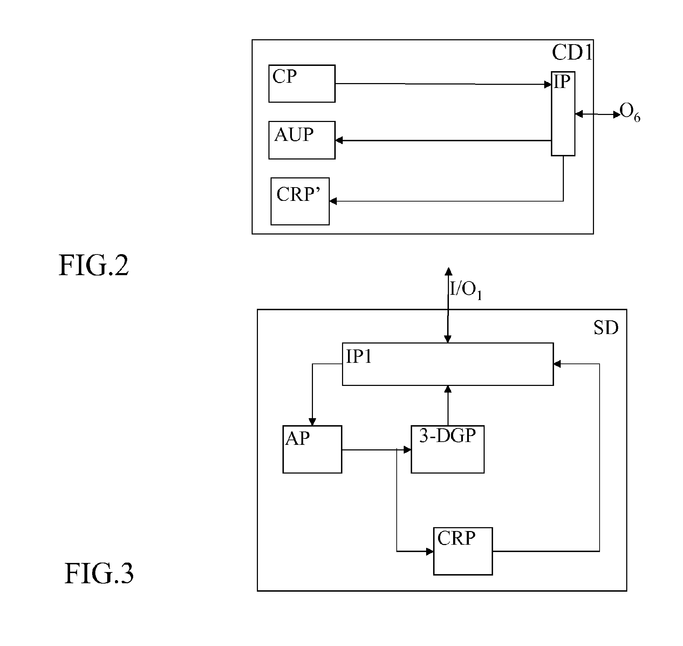

In the first paragraph of this description the main elements of this system with its functional parts as presented in respective figures FIG. 1, FIG. 2 and FIG. 3 are described. In the second paragraph, all connections between the before mentioned network elements and described functional parts are defined. In the succeeding paragraph the actual execution of the method for supporting a joint activity of a plurality of remote communication devices, is described.

A first essential element of this embodiment of the present invention, as presented in FIG. 1, is a first remote communications device CD1. Such first remote communications device may be any data communications device being coupled with or including means for detecting the presence and movement of physical objects of a real environment and a respective motion of such physical objects at said first communications device CD1 where these object for instance are gaming pieces, cards, dices, or a pencil, a finger or on another object forming part of such real environment of such first communications device CD1.

Applicable technologies for detecting motion and presence of such a physical object are RFID technology, MultiTouch Screens, camera's for capturing motion etc. When RFID technology is used, the presence and motion detection is based on the decoupling of an RFID tag (a piece) from a previous location (reader) and the couple of the tag with a new location. The decoupling refers to move away and the coupling means arriving at. If Multi Touch Technology is applied, the similar principal is used to detect the movement of pieces.

A further essential element of the present invention is a Server device SD that is able to deal with centrally processing of the detected motion of the physical objects of a real environment at the first communications device CD1 and subsequently taking care of generating a 3-Dimensional representation of the real environment at the second and/or further communications device and optionally being adapted to handle conflict resolution being the, in case of a conflict situation, generating of a conflict resolution instruction for a communications device of the plurality of communications devices at least based on the analyzing of the physical objects of a real environment and a respective motion of such physical objects at the first communications device captured.

A further essential element of the present invention is a second or further remote Communications device CD2 which device is adapted to augment the real environment of this second or further communications device with the 3-Dimensional representation of the real environment at the first communications device. Such augmenting of the real environment of such second or further communications device may be applied with a module adapted to show a virtual object e.g. a chess piece in 3D. The 3-Dimensional model of the object can be derived in two ways. It can be a pre-stored 3D model or it can be a reconstructed 3D model where the 3D model is reconstructed based on the camera input. Then the 3D models of different objects, e.g. chess pieces will be represented in the real environment of the second communications device CD2, e.g. be put on top of the real board belonging to the second communications device CD2. Shadows of those virtual objects can be generated by putting a light source that is in line with the light from real environment.

Each of the remote communication devices CD1, CD2 are coupled to the server device SD over a communications network CN possibly including networks like the internet, a mobile network or any other suitable connection over any combination of communication technologies, e.g. Wi-Fi, Bluetooth, Ethernet, Internet Protocol networks etc.

The first Communications device CD1 comprises a capturing part CP that is able to capture presence of physical objects of a real environment and a respective motion of such physical objects at the first communications device CD1. The capturing part CP may be include RFID technology for detecting motion of such a physical object, MultiTouch Screens, where multitouch further is referred to as MTT screen, or camera's for capturing motion etc. When RFID technology is used, the motion detection is based on the decoupling of an RFID tag (an object like a chess piece) from a previous location (reader) and the coupling of the tag with a new location. The decoupling refers to move away and the coupling means arriving at. If Multi Touch Technology is applied, the similar principal is used to detect the movement of pieces.

Such communications device may include an augmenting part AUP that is adapted to augment the real environment of a communications device with a 3D representation of the real environment at one or more other or further communications device. Such augmenting part AUP at a certain remote device is a module that is able to show a virtual object present at another remote device in 3-Dimensional manner. The 3D model of the captured physical object at a second remote communications device can be derived in two ways. It can be a pre-stored 3D model or it can be a reconstructed 3D model derived from the camera input of the capturing part CP of a first communications device. Then the 3D models of different pieces will be presented on in the real environment of a second communications device, e.g. on top of a virtual board. Shadows of those virtual pieces can be generated by putting a light source that is in line with the light from real environment.

The communications device CD1 further includes an interfacing part IP that is adapted to exchange signals between the communications device and the server device over the communications network CN.

Additionally the communications device may include a conflict resolving part CRP' that is adapted to handle the conflict resolution instruction which may include the presentation of the conflict situation and an instruction to overcome the situation e.g. "remove piece" in case of chess game

The first communications device CD1 has an interfacing part IP that has an input/output-terminal that is at the same time an input/output terminal of the first communications device CD1. The capturing part CP is coupled with an output to an input of the interfacing part IP. Further, the augmenting part AUP is coupled with an input to an output of the interfacing part IP and additionally the conflict resolving part CRP' has an is coupled with an input to an output of the interfacing part IP.

The second communications devices CD2 possess a similar functional structure as the first communications device CD1.

The Server device SD comprises an analysis part AP that is able to analyze the physical objects of a real environment and a respective motion of such physical objects at the first communications device CD1 captured and a 3-dimensional representation generating part 3DGP that is able to generate a 3D representation of the real environment at the first communications device CD1 based on the analyzing of the physical objects of a real environment and a respective motion of such physical objects at the first communications device CD1 captured and furthermore a conflict resolution part CRP that is adapted to generate, in case of a conflict situation, a conflict resolution instruction for at least one communications device of the plurality of communications devices at least based on the analyzing of the physical objects of a real environment and a respective motion of such physical objects at the first communications device CD1 captured.

The server device SD further includes an interfacing part IP1 that is adapted to exchange signals between the communications device and the server device over the communications network CN.

The server device SD1 has an interfacing part IP1 that has an input/output-terminal that is at the same time an input/output terminal of the server device SD. The interfacing part IP1 is coupled with an output to an input of the analysis part AP that in turn is coupled with an output to an input of the 3-dimensional representation generating part 3-DGP and additionally the analysis part AP is coupled with an output to an input of the conflict resolution part CRP that in turn is coupled with an output to an input of the interfacing part IP1. The 3-dimensional representation generating part 3-DGP in turn is coupled with an output to a further input of the interfacing part IP1.

In order to explain the present invention it is assumed that, in this embodiment of the present invention, the joint activity is a chess game being played with two players being located remotely and each player having a respective communications device CD1, CD2. Each of the communications devices CD1, CD 2 is coupled to the internet over an ADSL access network and a wireless home network. The server device SD for supporting the joint activity being the chess game in this embodiment is also coupled to the internet network CN via a wire (Ethernet, FTTH, USB, etc.) or a wireless (Bluetooth, wifi, 3G, LTE, etc.) connection.

Both the first communications device CD1 and the second communications device CD2 having a real environment that is formed by a chess board, and chess pieces. Both the chess board of the first communications device CD1 and the chess board of the second communications device CD2 are in this embodiment assumed to be a Multi-Touch Table. The chess board belonging to the first communications device CD1 is equipped with black chess pieces only and the chess board belonging to the second communications device CD2 is equipped with white chess pieces only.

During the chess game, one player only moves white chess pieces and the second player only moves the black chess pieces.

Further, the capturing part CP of the first communications device CD1 is implemented with a camera for capturing the presence and motion of the chess pieces located on the chess board belonging to the first communications device CD1.

Alternatively, the first communications device CD1 may be equipped with a capturing part CP being the multi-touch screen where the location and motion of each of the chess pieces is detected based on the touching of the pieces at the screen.

Hence the camera or a plurality of camera's capture the physical objects of a real environment, i.e. the black chess pieces on the chess board belonging to communications device CD1 and a additionally capture a motion of each of such chess pieces. The recorded signal of the camera, or the plurality of camera's, representing the physical objects of a real environment of the first communications device CD1, i.e. the black chess pieces on the chess board and additionally their motion on the chess board further referred to as the capture signal is forwarded by means of the interfacing part IP towards the server device SD over the communications network CN. Subsequently the interfacing part IP1 receives the capture signal and provides the analysis part AP of the server device SD with the capture signal from communications device CD1. The analysis part AP upon receipt analyzes the capture signal, i.e. the signal representing the physical objects of a real environment of the first communications device which are the black chess pieces on the chess board and additionally their motion on the chess board. Based on the analysis of the capture signal, the analysis part AP constructs a three dimensional, further referred to as 3-D, virtual representation of the black chess pieces on the chess board belonging to the first communications device CD1.

Subsequently, the 3-dimensional representation generating part 3DGP generates a 3D representation of the real environment at the first communications device CD1 that is based on the analyzing of the physical objects of a real environment and a respective motion of such physical objects at the first communications device CD1 captured. A signal representing the three dimensional virtual representation of the black chess pieces on the chess board belonging to the first communications device CD1 is sent by means of the interfacing part IP1 towards the second communications device CD2. The interfacing part of the second communications device CD2 receives the signal representing the three dimensional virtual representation of the black chess pieces on the chess board belonging to the first communications device CD1 and hands the signal over to the augmenting part AUP that in turn augments the real environment of the second communications device CD2 with the three dimensional virtual representation of the black chess pieces on the chess board belonging to the first communications device CD1. The augmenting is performed by presenting realistically three dimensional virtual representation of the black chess pieces on the chess board belonging to the first communications device CD1 at the chess board belonging to the second communications device in complementing the present white chess pieces on the chess board belonging to the second communications device with the three dimensional virtual representation of the black chess pieces on the chess board belonging to the first communications device CD1.

This realistic presentation of the three dimensional virtual representation of the black chess pieces on the chess board belonging to the first communications device CD1 in augmentation of the real white chess pieces on the chess board belonging to the second communications device may involve many different kind of technologies. For instance the virtual chess board can not only be displayed on a MTT 3D screen, but also on a projector screen. In that case both players have to wear 3D glasses to obtain the 3D effect. Alternatively goggle technologies instead of the MTT 3D screen can be applied as well. The virtual chess board can also be displayed on a 3D screen so that players without 3D glasses can also have a 3D view.

Additionally, based on the analysis of the capture signal the analysis part AP may detect a conflict caused by a movement of a chess piece where subsequently are found two pieces in the same location i.e. a virtual black chess piece and a real white chess piece (on the chess board belonging to the second communications device). As long as the motion detection module detects a chess piece is moving onto a position where there is already a chess piece present, a collision is detected. It means the new corner is going to kill the old inhabitant in case of the chess game. Hence, further the conflict resolution part CRP, generates a conflict resolution instruction for the relevant communications device, i.e. the communications device CD2 at least based on the before described analysis by means of the analysis part AP of communications device CD1 that analyzed the chess pieces and their position on the chess board belonging to the first communications device movement physical objects of a real environment and a respective motion of such physical objects at said first communications device CD1 captured.

The motion of the black chess piece onto a location of a virtual white chess piece means that the newcomer (black chess piece) is going to kill the old inhabitant (virtual white chess piece) in case of a chess game. Hence the conflict resolution part CRP generates an instruction saying which white chess piece is killed. Then the real white chess piece is to be removed by the player.

Next the player at the second communications device CD2 is to make a move with a white real chess piece. The camera or a plurality of camera's present at the second communications device CD2 in turn capture the physical objects of a real environment, i.e. the white chess pieces on the chess board belonging to communications device CD2 and a additionally capture a motion of each of such chess pieces. This and the subsequent proceedings are similar to that described for the capturing of the physical objects of a real environment at the second communications device and the augmenting and conflict resolution as described before.

It is to be noted that the other way around, the real environment of the first communications device is augmented as well based using the generated 3-D representation of the real environment of the second communications device CD2

It is to be noted that although the current disclosed embodiment deals with a joint activity being a chess game other kinds of games like poker game, monopoly, or any other game which requires tangible game pieces and even other activities such as document processing or collaborative painting are applicable as well and could have been disclosed instead.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for supporting a joint activity of a plurality of remote communication devices (CD1, CD2), each remote communications device of said plurality of remote communications devices (CD1, CD2) is coupled to a server device (SD) over a communications network (CN), **CHARACTERISED IN THAT** said method comprises the steps of:
a. a first remote communications device (CD1) capturing presence of at least one physical object at a real environment of said first remote communications device (CD1) and a respective motion of said at least one physical object; and
b. said server device (SD), analyzing said presence of said at least one physical object at said real environment of said first remote communications device (CD1) and a respective motion of said at least one physical object captured by said first remote communications device (CD1); and
c. generating a 3-Dimensional representation of said real environment at said first remote communications device (CD1) based on said analyzing said at least one physical object of said real environment of said first remote communications device (CD1) and a respective motion of said at least one physical object captured by said first remote communications device (CD1); and
d. augmenting a real environment of a second remote communications device (CD2) with said 3-Dimensional representation of said real environment at said first remote communications device (CD1).

2. Method for supporting a joint activity of a plurality of remote communication devices (CD1, CD2), according to claim 1, **CHARACTERISED IN THAT** said method further includes the step of:
e. generating a conflict resolution instruction for a remote communications device of said plurality of remote communications devices (CD1, CD2) at least based on said analyzing said at least one physical object of said real environment of said first remote communications device (CD1) and a respective motion of said at least one physical object captured by said first communications device (CD1).

3. Method for supporting a joint activity of a plurality of remote communication devices (CD1, CD2), according to claim 2, **CHARACTERISED IN THAT** said generating a conflict resolution instruction additionally based on at least one rule of said joint activity.

4. Method for supporting a joint activity of a plurality of remote communication devices (CD1, CD2), according to claim 2 or 3, **CHARACTERISED IN THAT** said generating a conflict resolution instruction additionally based on analyzing said at least one physical object of said real environment of said second or further remote communications device (CD2) and said respective motion of said at least one physical object captured by said second or further remote communications device of said plurality of remote communications devices (CD1, CD2).

5. System for supporting a joint activity of a plurality of remote communication devices (CD1, CD2), said system comprising a plurality of remote communication devices (CD1" CD2) and a server device (SD), each remote communications device of said plurality of remote communications devices (CD1" CD2) being coupled to said server device (SD) over a communications network (CN), **CHARACTERISED IN THAT** said system comprises:
a. a capturing part (CP) in said first remote communications device (CD1), said capturing part being adapted to capture presence of at least one physical object of a real environment of said first remote communications device (CD1) and a respective motion of said at least one physical object ; and
b. an analysis part (AP) in said server device (SD) ???, adapted to analyze said presence of said at least one physical object of a real environment of said first remote communications device (CD1) and a respective motion of said at least one physical objects captured by said first communications device (CD1); and
c. 3-dimensional representation generating part (3DGP), adapted to generate a 3-Dimensional representation of said real environment of said first remote communications device (CD1) based on said analyzing said at least one physical object of said real environment of said first remote communications device (CD1) and a respective motion of said at least one physical object captured by said first remote communications device (CD1); and
d. an augmenting part (AUP), adapted to augment a real environment of a second remote communications device (CD2) with said 3-Dimensional representation of said real environment of said first remote communications device (CD1).

6. System according to claim 5, **CHARACTERISED IN THAT** said system further comprises:
e. a conflict resolution part (CRP), adapted to generating a conflict resolution instruction for a remote communications device of said plurality of remote communications devices (CD1, CD2) at least based on said analyzing said at least one physical object of said real environment of said first remote communications device (CD1) and a respective motion of said at least one physical object captured by said first remote communications device (CD1).

7. System according to claim 6, **CHARACTERISED IN THAT** said conflict resolution part (CRP), further is adapted to generate a conflict resolution instruction for each remote communications device of said plurality of remote communications additionally based on at least one rule of said joint activity

8. System according to claim 6 or 7, **CHARACTERISED IN THAT** said conflict resolution part (CRP), further is adapted to generate a conflict resolution instruction for a remote communications device of said plurality of remote communications devices (CD1, CD2) additionally is based on analyzing said at least one physical object of said second or further remote communications device (CD2) and said respective motion of said at least one physical object of said real environment captured by said second or further communications device of said plurality of communications devices (CD1, CD2).

9. Remote communications device (CD1), for use in a system according to claim 5, **CHARACTERISED IN THAT** said remote communications device (CD1) comprises:
a. a capturing part (CP) that is adapted to capture presence of at least one physical object of a real environment of said first remote communications device (CD1) and a respective motion of said at least one physical object at said first remote communications device (CD1).

10. Server device (SD), for use in a system according to claim 5, **CHARACTERISED IN THAT** said Server device (SD) comprises:
a. an analysis part (AP), adapted to analyze said at least one physical object of said real environment of said first remote communications device (CD1) and a respective motion of said at least one physical object captured by said first communications device (CD1); and
b. a 3-dimensional representation generating part (3DGP), adapted to generate a 3-Dimensional representation of said real environment at said first remote communications device (CD1) based on said analyzing said at least one physical object of said real environment of said first remote communications device (CD1) and a respective motion of said at least one physical objects captured at said first communications remote device (CD1).

11. Server device (SD), according to claim 10, **CHARACTERISED IN THAT** said server device (SD) further comprises:
c. a conflict resolution part (CRP), adapted to generating a conflict resolution instruction for a remote communications device of said plurality of remote communications devices (CD1, CD2) at least based on said analyzing said at least one physical object of said real environment of said first remote communications device (CD1) and a respective motion of said at least one physical object captured by said first remote communications device (CD1).

12. Server device (SD), according to claim 11, **CHARACTERISED IN THAT** said
conflict resolution part (CRP), further is adapted to generate a conflict resolution instruction for each remote communications device of said plurality of remote communication devices (CD1, CD2) additionally based on at least one rule of said joint activity.

13. Server device (SD), according to claim 11 or 12, **CHARACTERISED IN THAT** said conflict resolution part (CRP), further is adapted to generate said conflict resolution instruction for a remote communications device of said plurality of remote communication devices (CD1, CD2) additionally is
based on analyzing said at least one physical object of said real environment of said second or further remote communications device (CD2) and said respective motion of said at least one physical object captured by a second or further remote communications device of said plurality of remote communications devices (CD1, CD2).

14. Second remote Communications device (CD2), for use in a system according to claim 5, **CHARACTERISED IN THAT** said second remote communications device (CD2) comprises:
a. an augmenting part (AUP), adapted to augment a real environment of said second communications device (CD2) with said 3-Dimensional representation of said real environment of said first remote communications device (CD1).
